# EUROPEAN PATENT APPLICATION

(11) **EP 2 637 121 A1**
(43) Date of publication of application: **11.09.2013**
(21) Application number: 13156065.8
(22) Date of filing: 21.02.2013
(51) Int. Cl.: G06F 21/56

(54) **A method for detecting and removing malware**

(30) Priority: 06.03.2012 US 201213413383
(71) Applicant: Trusteer Ltd., 67442 Tel Aviv (IL)
(72) Inventor: Klein, Amit, 46433 Herzliya (IL); Boodaei, Mickey, 53633 Givatayim (IL)
(74) Representative: Lampis, Marco

(57) **Abstract**

A method for detecting and removing a suspicious software code in a computer system, according to which the installation process of the suspicious software code is monitored by a client agent residing within the computer system where predetermined operations of the suspicious software code are identified and registered during the installation process.

The predetermined operations are compared with a known software code in order to define whether the software code is similar to the known software code. It is then determined if the suspicious software code is malware and if it is, the client agent is instructed to uninstall the suspicious software code from the OS, or to remove its entry from the boot registry.

## Description

### Field of the Invention

The present invention relates to the field of Internet security. More particularly, the invention relates to a method for providing more secure browsing and preventing the theft of online sensitive information.

### Background of the invention

As the web browser is becoming the most frequently used application on a personal computer, and as more user confidential data is being entered through the web browser, such as banking and shopping transactions, malicious attacks are being increasingly focused on the web browser. There is an increasing number of malicious exploits that can install malicious code, such that a malicious browser extension persists on a target computer system. For a malicious browser extension to persist on a computer system, typically a malicious file is created so that the malicious extension persists on the disk, and a registry entry associated with the malicious browser extension is created to notify the web browser that a browser extension has been registered with the operating system (OS).

Thus, for example, if a user enters user confidential data into a form field of a web page, and a malicious browser extension is present on the web browser, when the malicious browser extension receives an event, the malicious browser extension potentially has the ability to access and modify the content of the event. For example, the malicious browser can copy or modify the user confidential data, such as a bank account routing number in the POST data parameter of the event, resulting in compromise of the user confidential data.

The system registry is a central hierarchical database managed by the operating system to store configuration information for users, applications, and devices. Malware must manipulate the registry because it is the primary way to start a process running at boot time. As the computer boots the Windows® OS, for example, will interrogate the startup keys and load whatever process is described. Thus, malware often manipulates the registry to ensure that it is loaded at boot time. Because the malware's lifetime is dependent on registry keys within the registry, it will go to great lengths to ensure that its registry keys are not modified or moved. Malware may hide itself from being shown in the application process list or it might change its file names, registry keys, or key values during the reboot process. Malware may attempt to prevent its removal by continuously rewriting its registry keys to the registry. These tactics pose a problem for anti-virus software, and can go undetected by currently available techniques which simply remove registry keys without taking into account these interdependencies.

To address this problem and to protect users from being exploited while using a personal computer, malware removal tools are required.

It is therefore an object of the present invention to provide a system which is capable of detecting behavior associated with a malware.

It is another object of the present invention to provide a system capable of uninstalling the active code of a malware.

Other objects and advantages of the invention will become apparent as the description proceeds.

### Summary of the Invention

The present invention is directed to a method for detecting and removing a suspicious software code in a computer system, comprising the steps of:
a. monitoring the installation process of the suspicious software code by a client agent residing within the computer system;
b. identifying and registering predetermined operations of the suspicious software code during the installation process;
c. comparing the predetermined operations with a known software code in order to define whether the software code is similar to the known software code;
d. determining if the suspicious software code is malware and; and
e. if it is, instructing the client agent to uninstall the suspicious software code from the OS, or to remove its entry from the boot registry.

Comparison and determination may be made in a remote malware detection server, to which the client agent reports about the predetermined operations, or by the client agent.

Installation attempts may be detected by monitoring the registry key. The installation process may be capable of surviving a reboot process.

Instructions to uninstall or to remove may be sent from the remote server in real-time or offline. Uninstall or to remove operations may be performed as a result of an external trigger or of a trigger from the user.

A decision if the suspicious software code is malware may be made according to the level of correlation between the registered predetermined operations and predetermined events.

The method may further comprise the step of storing uninstalled or removed software code for allowing reinstating them whenever they are mistakenly removed.

### Brief Description of the Drawings

In the drawings:
- Fig. 1 is a diagram of a computer system including a client agent for monitoring suspicious software codes on a host computer, in accordance with an embodiment of the present invention; and
- Fig. 2 is a flow chart generally illustrating an embodiment of the invention.

### Detailed Description of Preferred Embodiments

The Figures and the following description relate to embodiments of the present invention by way of illustration only. It should be noted that from the following discussion, alternative embodiments of the structures and methods disclosed herein will be readily recognized as viable alternatives that may be employed without departing from the principles of the claimed invention.

Reference will now be made to several embodiments of the present invention(s), examples of which are illustrated in the accompanying figures. Wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

Unless otherwise indicated, the functions described herein may be performed by executable code and instructions stored in computer readable medium and running on one or more processor-based systems. However, state machines, and/or hardwired electronic circuits can also be utilized. Further, with respect to the example processes described herein, not all the process states need to be reached, nor do the states have to be performed in the illustrated order.

Various terms are used throughout the description and the claims which should have conventional meanings to those with a pertinent understanding of computer programming in general. Other terms will perhaps be more familiar to those more particular conversant in multithreaded programming and a windows operating system (OS). Additionally, various descriptive terms are used in describing the exemplary embodiments in order to facilitate an explanation of them, and to aid one's understanding. However, while the description to follow may entail terminology which is perhaps tailored to certain computing or programming environments or to the various embodiments themselves, the ordinarily skilled artisan will appreciate that such terminology is employed in a descriptive sense and not a limiting sense. Where a confined meaning of a term is intended, it will be explicitly set forth or otherwise apparent from the disclosure.

Similarly, while certain examples may refer to a Personal Computer (PC) system, other computer or electronic systems can be used as well, such as, without limitation, a network-enabled personal digital assistant (PDA), a smart phone, and so on.

The present invention relates to a method for detecting malwares (or other suspicious software codes) and for uninstalling at least their active code from a computer system. According to an embodiment of the invention, and as will be exemplified hereinafter, a method is provided for monitoring the installing events/processes (that may survive a reboot process) of a suspicious software code (at least those related to the booting) and then monitoring its activities after the installation in order to remove at least the active code of such suspicious software code from the boot registry. Also, installation attempts may be detected by monitoring the registry key.

The term "malware" refers herein to a malicious code that is defined as any computer program, module, set of modules, or code that enters a computer system environment without an authorized user's knowledge and/or without an authorized user's consent. Further herein, malicious activity is any activity resulting from the execution of malicious code, or even a code sequence from an executable which is associated with predetermined events.

The present invention proposes detecting and removing installed malwares. In one embodiment, a security application (i.e., a client agent) is installed on a host computer system that is registered to monitor malware startup registration events in the registry of the host computer.

When such events are detected, a determination is made whether that software code is a malware. In some embodiments of the present invention, the determination is done in a remote malware detection server associated with the client agent. If the software code is determined to be a malware, the client agent removes the installation events of that software code from the startup locations. Removal may be done by in response to an external trigger, originated from the detection server or from the user (days or even weeks after being monitored). In this case, the client agent will ask the user to reboot his host computer.

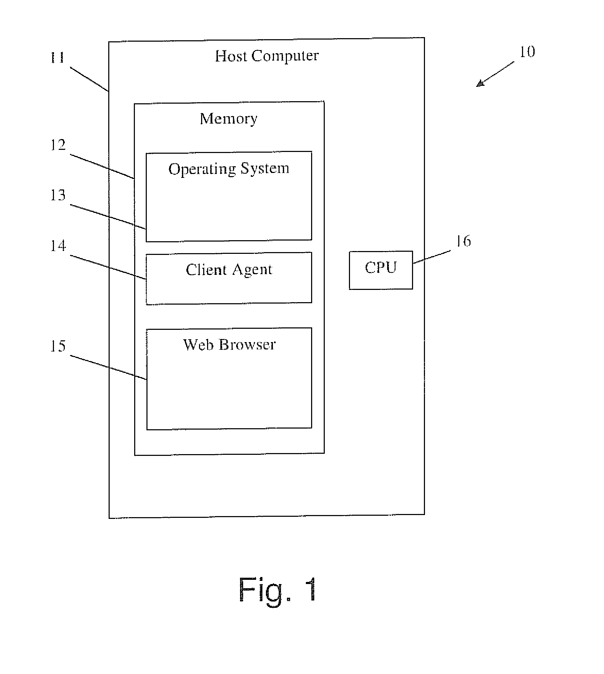

The client agent allows the remote server to assess malware threats in an individual computing system. The client agent monitors the activities of each suspicious software code, starting from the installation events (at least those related to the booting) and continuing monitoring the behavior such software after the installation. A representative computing environment for use in implementing aspects of the invention may be appreciate with initial reference to Fig. 1. Representative computing environment may utilize a general purpose computer system for executing applications in accordance with the described teachings.

Referring now to Fig. 1, a diagram of a computer system including a client agent for monitoring suspicious software codes on a host computer system is shown in accordance with an embodiment of the present invention. The host computer system, sometimes called a user device, typically includes a central processing unit (CPU), an input output (I/O) interface, and a memory, including an operating system and a web browser.

In one embodiment, the client agent comprises: a) a monitoring engine that is configured to monitor installation events in the registry of the Operation System (OS) and its activities after the installation; b) a communication module for communicating with a remote malware detection server. In one embodiment, the host computer system is coupled to remote malware detection server by a network, such as the Internet; and c) an undo engine for removing (at least) the active code of one of the monitored suspicious software from the boot registry.

### Undo Engine

With an appreciation the above, an approach for removing suspicious software code is now discussed. For each suspicious software code a determination is made at the remote server whether it represents a malware. If so, an event is created and a message is posted to the client agent, with the event and the software code needed to be removed from the registry. This message is processed by the client agent and is converted into a system instructions (with enough credentials) to uninstall at least the active code from the registry or from other locations into which the malware may copy itself, such as the Startup folder. Alternatively, if the malware drops a browser add-on file, this file will be removed. The registry key of this file is then deleted through the operating system.

In case when a particular executable has been removed by mistake (i.e., a benign executable has been considered as malware), it can be stored in a specific (isolated) location, from which it can be reinstated by, for example, an UNDO identifier (a sequential number that is stored in the system registry. Each time the number is retrieved, it is automatically incremented). The UNDO ID ensures that undo information can be uniquely tagged.

Reference is now made to describe the operation of cleaning the registry. For each suspicious software code object, determinations are made at whether the object represents a registry key, a registry COM server, or a service or driver. If a registry key, a determination is made whether the registry removal code equals a remove value and if not, then the registry key is cleaned. If the object represents a registry COM server, then COM server registry keys are deleted. If the object represents a service or driver, a full key name is created to the service or driver by adding the registry path to the key name, after which the registry key is deleted. Depending on the nature of the software code, flow will eventually proceed to ascertain if there are more objects within the list to remove. Once all objects have been removed, the registry cleaning procedure is completed.

According to an embodiment of the present invention, the client agent performs the following tasks: At first it monitors the installation process, which is generally in the form of installation events, in the registry of each suspicious software code. At the next step, it may monitor the activity of the suspicious software code after the installation. Alternatively, any "new" executable, or an executable which is not digitally signed, may be considered a suspicious software code. This is done in order to analyze the behavior of that software code in the remote server.

For example, known behavior of several types of malwares such as Zeus and SpyEye (types of a Trojan horse that steals banking information by keystroke logging) is first to create a "Run" key in the registry in order to load itself at the boot sequence of the OS.

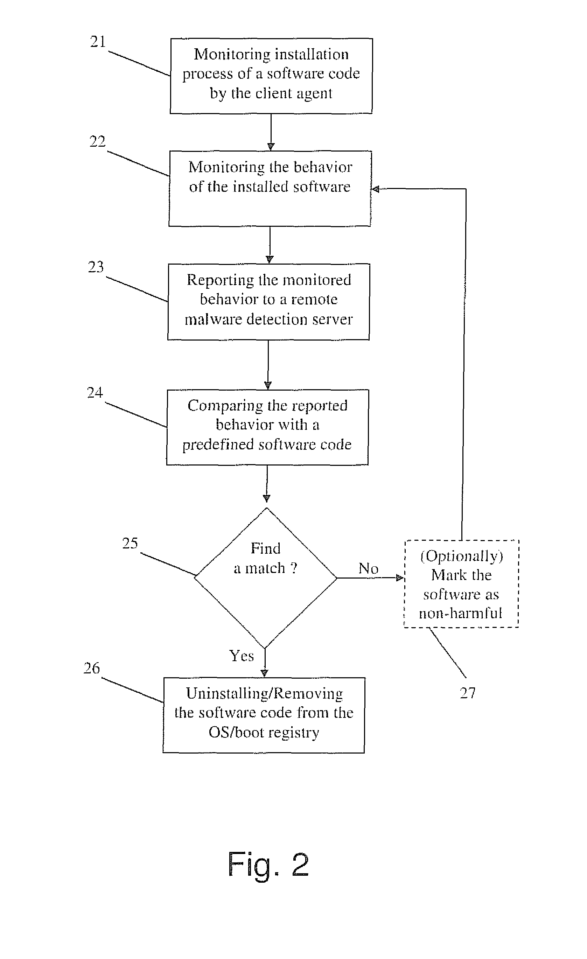

Fig. 2 illustrates a flowchart of the process for detecting and removing malware, in accordance with an embodiment of the invention. At the first step 21, the installation process of a suspicious software code is monitored by the client agent. At the next step 22, the behavior of the installed suspicious software code is monitored. At the next step 23, the monitored behavior is reported to a remote malware detection server. At the next step 24, the reported behavior is compared with a predefined known software code. At the next step 25, the process checks if there is a match. If there is a match, at the next step 26, the suspicious software code is uninstalled or removed from the OS and/or from the boot registry. If there is no match, at the next step 27, the suspicious software code may be marked as non-harmful.

Instructions to uninstall or to remove may be sent from the remote server in real-time or offline. The decision if the suspicious software code is malware may be made (e.g., by the remote malware detection server or by the client agent) according to the level of correlation between registered predetermined operations and predetermined events.

As used herein, a computer memory refers to a volatile memory, a non-volatile memory, or a combination of the two. Although the security application is referred to as an application, this is illustrative only. The security application should be capable of being called from an application or from the operating system. In one embodiment, an application is generally defined to be any executable code. Moreover, those of skill in the art will understand that when it is said that an application or an operation takes some action, the action is the result of executing one or more instructions by a processor.

As illustrated in Fig. 1, this medium may belong to the computer system itself. However, the medium also may be removed from the computer system. For example, the security application may be stored in a memory that is physically located in a location different from the host computer. This could be accomplished in a client-server system, or alternatively via a connection to another computer via modems and analog lines, or digital interfaces and a digital carrier line.

In view of this disclosure, the functionalities of the security application in accordance with the embodiments of the present invention can be implemented in a wide variety of computer system configurations. In addition, the functionalities of the security application could be stored as different modules in memories of different devices. For example, security the application could initially be stored in computer system, and then as necessary, a portion of the security application could be transferred to the host computer system and executed on the host computer system. Consequently, part of the functionality of the security application would be executed on the processor of server computer system, and another part would be executed on processor of the host computer system.

In view of this disclosure, those of skill in the art can implement various embodiments of the present invention in a wide-variety of physical hardware configurations using an operating system and computer programming language of interest to the user. In yet another embodiment, the security application is stored in a memory of a server computer system. The security application is transferred over a network to the memory in a host computer system.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

## Claims

1. A method for detecting and removing a suspicious software code in a computer system, comprising the steps of:
a. monitoring the installation process of said suspicious software code by a client agent, being a security application residing within said computer system;
b. identifying and registering predetermined operations of said suspicious software code during said installation process;
c. comparing said predetermined operations with a known software code in order to define whether said suspicious software code is similar to said known software code;
d. determining if said suspicious software code is malware and; and
e. if it is, instructing said client agent to uninstall said suspicious software code from said OS, or to remove its entry from the boot registry.

2. A method according to claim 1, wherein comparison and determination are made in a remote malware detection server, to which the client agent reports about registered predetermined operations.

3. A method according to claim 1, wherein comparison and determination are made by the client agent.

4. A method according to claim 1, wherein installation attempts are detected by monitoring the registry key.

5. A method according to claim 1, wherein the installation process is being capable of surviving a reboot process.

6. A method according to claim 1, wherein instructions to uninstall or to remove are sent from the remote server in real-time or offline.

7. A method according to claim 1, wherein the uninstall or to remove operations are performed as a result of an external trigger.

8. A method according to claim 1, wherein the uninstall or remove operations are performed as a result of a trigger from the user.

9. A method according to claim 1, wherein a decision if the suspicious software code is malware is made according to the level of correlation between the registered predetermined operations and predetermined events.

10. A method according to claim 1, further comprising storing uninstalled or removed software code for allowing reinstating them whenever they are mistakenly removed.
